# FASCICULE DE BREVET EUROPEEN

(11) **EP 2 910 399 B1**
(45) Date de publication et mention de la délivrance du brevet: **03.10.2018**
(21) Numéro de dépôt: 15153062.3
(22) Date de dépôt: 29.01.2015
(51) Int. Cl.: B60L 5/26

(54) **Pantographe de véhicule ferroviaire**
Pantograf für Schienenfahrzeug
Railway vehicle pantograph

(30) Priorité: 24.02.2014 FR 1451466
(43) Date de publication de la demande: 26.08.2015
(73) Titulaire: Faiveley Transport Tours, 37700 Saint Pierre des Corps (FR)
(72) Inventeur: Geoffroy, Philippe, 37510 BALLAN MIRE (FR)
(74) Mandataire: Novagraaf Technologies

(56) Documents cités:
- CN-U- 203 391 633
- DE-A1- 2 525 887
- JP-A- 2007 124 730
- KR-A- 20080 051 978

## Description

La présente invention concerne, de façon générale, le domaine des pantographes de véhicule ferroviaire.

Ces pantographes présentent un cadre articulé, déplaçable verticalement pour venir collecter le courant sur une ligne caténaire nécessaire pour faire avancer le véhicule ferroviaire.

Plus précisément, le cadre articulé est équipé d'un bras inférieur articulé à un bras supérieur.

Le bras supérieur est fixé à une première extrémité à la tête de captage de courant qui est en contact avec la ligne caténaire.

Les bras supérieur et inférieur conduisent le courant et sont en métal.

Ils sont par exemple en acier ou en aluminium.

Il est décrit de tels pantographes par exemple dans les demandes de brevet européen EP 2457764 et EP 1219491.

Le document KR 2008 0051978 décrit un pantographe selon le préambule de la revendication 1.

Il existe le besoin de diminuer la masse de ces bras assez conséquente tout en conservant leur aérodynamique.

Dans ce contexte, la présente invention a pour but de proposer un pantographe de véhicule ferroviaire qui répond à ce besoin.

A cette fin, le pantographe de véhicule ferroviaire est remarquable en ce que le bras supérieur est en matériau composite et en ce que les moyens de conduction du courant comportent un élément conducteur distinct du bras supérieur, fixé sur la tête de captage et relié électriquement à la ou aux lignes de courant.

Avantageusement, l'élément conducteur est un tube anti-balançant de la tête de captage, et des moyens de liaison électrique relient le tube anti-balançant à une bande de frottements de la tête de captage.

Les moyens de conduction comportent le bras inférieur en matériau conducteur, relié électriquement, par des moyens de liaison électrique, au tube anti-balançant et à la ou aux lignes de courant.

Le bras supérieur peut comporter des parties longitudinales, suivant la longueur du bras supérieur, ayant des sections transversales différentes

Le bras supérieur peut comporter une partie tronconique.

Le bras supérieur peut comporter une partie ayant une section transversale elliptique, la plus grande dimension de l'ellipse étant parallèle à une direction longitudinale de la tête de captage.

Avantageusement, la deuxième partie intermédiaire présente une variation d'au moins une dimension de l'ellipse suivant la longueur du bras supérieur.

La deuxième partie intermédiaire peut présenter une variation de la plus petite dimension de l'ellipse sur une première longueur.

La deuxième partie intermédiaire peut présenter une variation de la plus grande dimension de l'ellipse sur une deuxième longueur.

La pièce de liaison mécanique est en métal et peut présenter une partie supérieure de raccord avec le bras supérieur et une partie inférieure de raccord avec le bras inférieur.

Le bras inférieur peut être est articulé à deux flasques de la pièce de liaison mécanique.

Une extrémité inférieure du bras supérieur peut s'emmancher par-dessus un embout fileté de la partie supérieure de raccord, auquel elle est vissée, collée et rivetée.

L'embout fileté peut comporter une partie de rigidification.

La partie de rigidification peut être tronconique et son épaisseur peut augmenter vers la partie inférieure de raccord.

Une tringlerie inférieure est articulée sur la partie inférieure de raccord de la pièce de liaison mécanique.

D'autres caractéristiques et avantages de l'invention ressortiront clairement de la description qui en est faite ci-après, à titre indicatif et nullement limitatif, en référence aux dessins annexés, dans lesquels :
- la figure 1 représente une vue en perspective arrière d'un pantographe selon l'invention ;
- les figures 2a à 2c représentent des vues de côté, de dessus et en perspective arrière éclatée d'un bras supérieur du pantographe ;
- les figures 3a à 3h représentent des vues en coupe longitudinale et en coupe transversale d'un mode de réalisation du bras supérieur;
- les figures 4a et 4b illustrent une pièce de liaison entre le bras supérieur et le bras inférieur du pantographe ;
- les figures 5a à 5d illustrent des vues en perspective arrière, de dessus, de côté et de face des liaisons entre un tube anti-balançant et le bras inférieur ou entre le tube anti-balançant et la tête de captage.

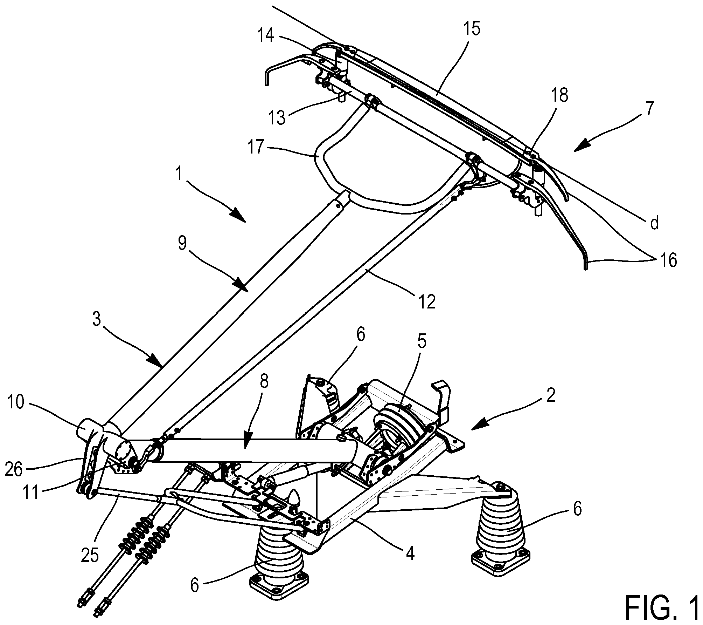

Comme illustré sur la figure 1, le pantographe 1 comprend un châssis 2, un cadre articulé 3, situé au-dessus du châssis 2 et destiné à se déplacer dans un plan sensiblement vertical.

Le châssis 2 présente un bâti 4, un vérin d'équilibrage 5 relié à une alimentation pneumatique, des isolateurs 6 électriques, un amortisseur.

Le cadre articulé 3 est équipé de bras articulés qui permettent de déplacer une tête de captage 7.

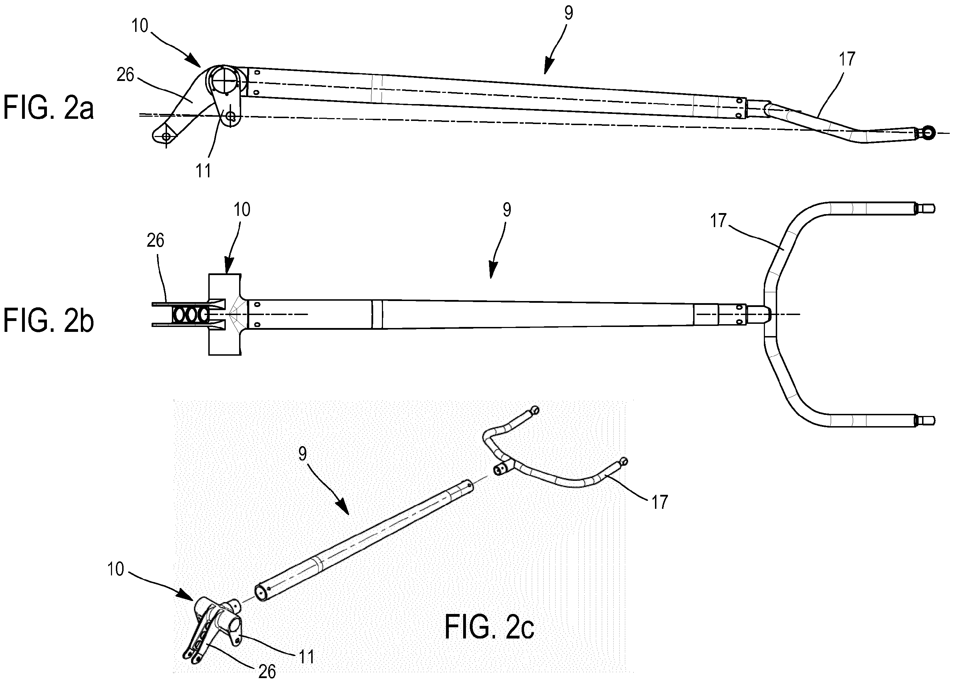

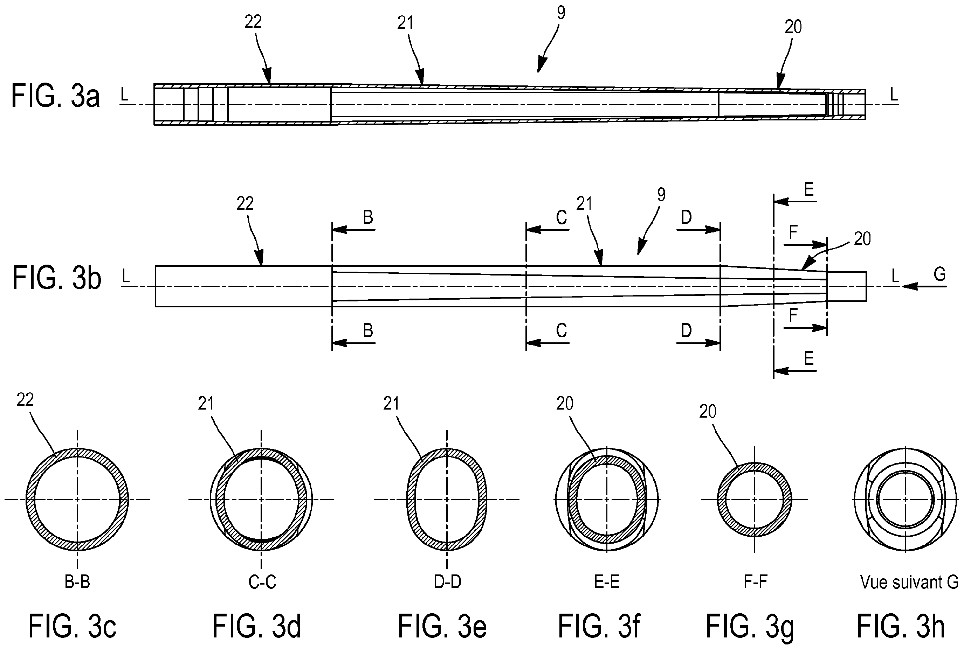

Plus précisément, le cadre articulé 3 présente un bras inférieur 8 articulé à un bras supérieur 9 (illustré sur les figures 2a à 3h), au niveau d'une pièce de liaison mécanique 10.

Le bras inférieur 8 est, en l'espèce ici, fixé au niveau de deux flasques 11 de la pièce de liaison mécanique 10.

Un tube anti-balançant 12 est relié par une première extrémité inférieure à la liaison entre le bras inférieur 8 et le bras supérieur 9, et par une deuxième extrémité supérieure à la tête de captage 7.

Le tube anti-balançant 12 peut présenter une longueur sensiblement comparable à celle du bras supérieur 9 et se situer à la même hauteur que le bras supérieur 9 par rapport à la toiture du véhicule ferroviaire.

Plus précisément ici, sans que cela soit limitatif, le tube anti-balançant 12 est articulé à une patte du bras inférieur 8.

La tête de captage 7 comporte, en outre, un arbre d'articulation 13 de la tête auquel est relié le tube anti-balançant 12 par sa deuxième extrémité, et une boîte à ressort 14 située sur cet arbre d'articulation 13.

La tête de captage 7 présente un archet qui comporte une ou plusieurs bandes de frottements 15 sensiblement parallèles à l'arbre d'articulation 13 et destinés à venir en contact avec la ligne caténaire, et des cornes 16 reliés à la boîte à ressort 14.

Le bras supérieur 9 peut être relié à l'arbre d'articulation 13 par une fourche 17, comme illustré sur les figures 2a à 2c.

Des moyens de conduction du courant sont réalisés entre la tête de captage 7 et une ou plusieurs lignes de courant de toiture du véhicule ferroviaire illustrées sur la figure 1.

Conformément à l'invention, le bras supérieur 9 est en matériau composite et les moyens de conduction du courant comportent un élément conducteur distinct du bras supérieur 9, fixé sur la tête de captage 7 et électriquement relié directement ou indirectement à la ou aux lignes de courant.

Un matériau composite est constitué d'une ossature appelée renfort (généralement des fibres) qui assure la tenue mécanique et d'un liant appelé matrice (généralement en matière plastique tel que de la résine thermoplastique ou thermodurcissable) qui assure la cohésion de la structure et la transmission des efforts vers le renfort.

Tout type de composite est ici possible.

Par exemple, les composites à matrices organiques (CMO), les composites à matrices céramiques (CMC), et les composites à matrices métalliques (CMM).

Avantageusement, dans l'invention, l'élément conducteur est le tube anti-balançant 12 de la tête de captage 7, ce qui permet de réduire les coûts en utilisant la structure existante du pantographe 1.

Pour éviter ou limiter la dilation thermique du tube anti-balançant 12 qui est conducteur de courant, il existe plusieurs possibilités.

Il est possible de sur-dimensionner le tube anti-balançant 12, par exemple en augmentant son épaisseur en le dimensionnant pour un courant de 2000 A si on souhaite faire passer un courant de 1000 A dans ce tube.

Il est aussi possible de réaliser des ouvertures dans le tube anti-balançant 12 pour le refroidir.

Le tube anti-balançant 12 conducteur peut aussi être réalisé dans un matériau conducteur adapté au matériau conducteur du bras inférieur 8.

L'invention permet ainsi de réduire le poids du bras supérieur 9, par exemple de moitié, tout en donnant au bras une forme aérodynamique du fait de l'utilisation du matériau composite auquel on peut donner la forme que l'on souhaite, ce qui permet d'avoir une résistance à l'avancement faible du pantographe.

Ainsi, le pantographe 1 selon l'invention permet un gain de masse dynamique et réduit l'inertie du pantographe 1 en mouvement vertical.

En d'autres termes, les mouvements du bras supérieur 9 sont plus faibles et/ou plus rapides car ils sont mieux maîtrisés, le pantographe 1 ayant moins d'inertie dans son déplacement vertical.

En effet, les moyens pneumatiques actionnés pour le déplacement du pantographe 1 et son contact avec la ligne caténaire, ont un meilleur contrôle du déplacement plus faible et/ou plus rapide du bras supérieur du pantographe 1 et réalisent des meilleurs contacts et tenues de l'archet sur et contre la ligne caténaire.

D'autre part, comme la masse est réduite, en cas de chocs, la force du choc répercutée par le pantographe 1 sur le châssis 2 qui tient le pantographe 1, est diminuée, ce qui limite l'usure du châssis 2.

Ce pantographe 1 permet également de respecter un encombrement limite sur la toiture.

En variante de réalisation non représentée, il serait aussi possible de réaliser un tube conducteur de courant autour, dans ou fixé par rapport au bras supérieur 9 composite, sans utiliser le tube anti-balançant 12 comme conducteur de courant.

Il serait aussi possible de réaliser un premier élément conducteur de courant autour, dans ou fixé par rapport au bras supérieur 9 composite, avec en plus l'utilisation du tube anti-balançant 12 comme deuxième élément conducteur de courant, pour répartir le courant dans deux tubes.

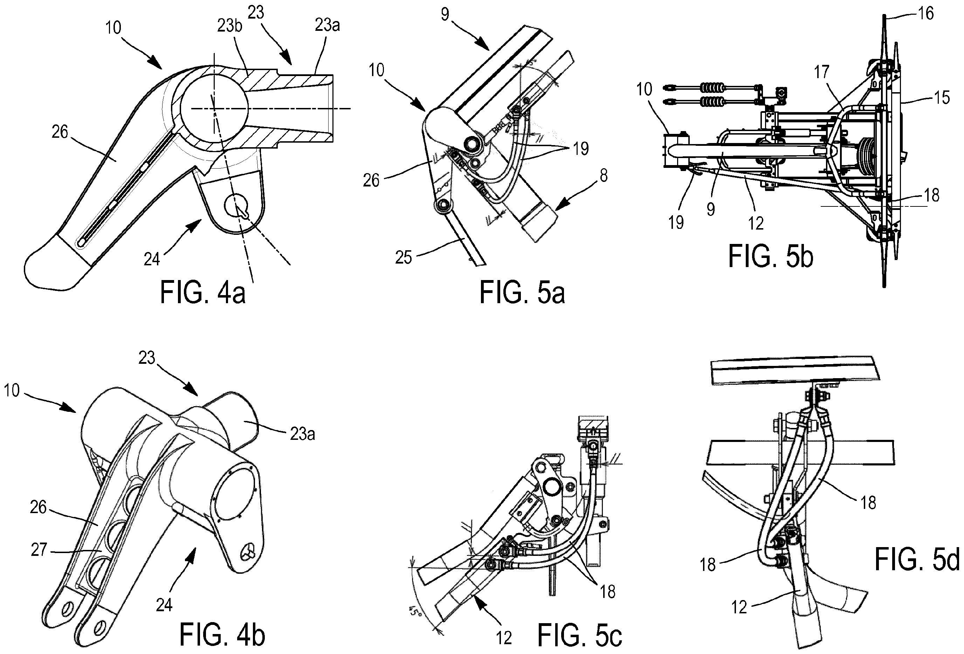

Des premiers moyens 18 de liaison électrique relient le tube anti-balançant 12 à la bande de frottements 15 de la tête de captage 7 auxquels ils sont fixés par exemple des vis, comme illustré sur les figures 5a à 5d.

Il s'agit ici de deux câbles électriques situés avant l'articulation entre le tube anti-balançant 12 et l'arbre d'articulation 13.

Avantageusement, les moyens de conduction comportent le bras inférieur 8 en matériau conducteur, relié électriquement, par des deuxièmes moyens 19 de liaison électrique, ici deux câbles électriques, au tube anti-balançant 12.

Il s'agit ici de deux câbles électriques fixés par vis et situés sur le bras inférieur 8 avant l'articulation entre le bras inférieur 8 et le bras supérieur 9, et sur le tube anti-balançant 12 après cette articulation.

Des troisièmes moyens de liaison relient le bras inférieur 8 à la ou aux lignes de courant.

Dans une autre réalisation non représentée, le bras inférieur 8 pourrait être en matériau composite, ce qui permettrait de supprimer les isolateurs électriques 6, et les moyens de conduction pourraient comporter un deuxième élément conducteur tel qu'un tube remplaçant le bras inférieur 8 pour conduire le courant.

Dans une autre réalisation non représentée, des moyens de liaison électrique tels que des câbles pourraient être directement reliés à l'élément conducteur fixé à la tête de captage 7, en remplacement/complément du bras inférieur ou du deuxième élément conducteur.

Comme le matériau composite fléchit plus que le métal, il est prévu une rigidification ou renfort du bras supérieur 9 en composite.

Cette rigidification est en particulier transversale à la longueur du bras supérieur 9, le bras supérieur 9 ayant tendance à fléchir dans le plan sensiblement vertical de son mouvement du fait des efforts exercés avec le contact de la ligne caténaire tendue.

Cette rigidification peut être réalisée sur le bras supérieur 9 en composite soit par des moyens de renfort intérieur non représentés tels que des anneaux intérieurs de renfort ou des rainures, et/ou par des augmentations d'épaisseur, et/ou par des sections transversales différentes.

Avantageusement, par exemple, le bras supérieur 9 en composite peut comporter différentes parties longitudinales ayant des sections transversales différentes.

En outre il peut comporter des parties longitudinales ayant des variations de section transversale différentes, suivant sa longueur L. En variante de réalisation, il peut présenter une forme sensiblement cylindrique.

Dans le cas où il présente différentes sections transversales, le bras supérieur 9 peut comporter ainsi une première partie avant 20 tronconique qui est relié à la fourche 17 par une partie d'extrémité circulaire, par vissage, collage et rivetage.

Cette forme tronconique est aérodynamique et limite la traînée de l'écoulement d'air autour du pantographe 1.

Toute forme aérodynamique, par exemple ovale ou en forme d'aile d'avion, qui limiterait la trainée de l'écoulement d'air autour du pantographe 1 est envisageable.

Le bras supérieur 9 peut comporter une deuxième partie intermédiaire 21 ayant une section transversale elliptique.

La plus grande dimension ou grand axe de l'ellipse est parallèle à une direction longitudinale d de la tête de captage 7, ou en d'autres termes transversale à la longueur L.

Ici, la section transversale du bras supérieur 9 varie de façon graduelle suivant la direction longitudinale L; en particulier le plus grand axe et le plus petit axe de l'ellipse diminuent suivant la longueur du bras supérieur 9 quand on se rapproche de la première partie avant 20 du bras supérieur 9.

Plus précisément, la deuxième partie intermédiaire 21 présente une variation du plus petit axe de l'ellipse sur une première longueur.

Puis, la deuxième partie intermédiaire 21 présente une variation du plus grande axe de l'ellipse sur une deuxième longueur plus près de la première partie avant 20 que la première longueur.

D'autres réalisations de variations de l'ellipse seraient envisageables.

Le bras supérieur 9 comporte une troisième partie arrière 22 cylindrique ayant une section transversale circulaire.

Cette troisième partie arrière 22 est reliée à la deuxième partie intermédiaire 21 et vient se fixer par son extrémité sur la pièce de liaison mécanique 10 en métal par filetage, collage et rivetage.

La pièce de liaison mécanique 10 présente ainsi une partie supérieure de raccord 23 avec le bras supérieur 9, et une partie inférieure de raccord 24 avec le bras inférieur 8.

Plus précisément, une extrémité inférieure du bras supérieur 9 s'emmanche par-dessus un embout fileté 23a de la partie supérieure de raccord 23, auquel elle est vissée, collée et rivetée.

La partie supérieure de raccord 23 comporte une partie de rigidification ou de renfort 23b.

La partie de rigidification 23b est tronconique et son épaisseur augmente vers la partie inférieure de raccord 24 jusqu'au tube transversal soudé sur le corps de la pièce de liaison mécanique qui comporte les deux flasques 11, comme représenté sur la figure 4a.

Une tringle inférieure 25 est prévue.

La pièce de liaison mécanique 10 comporte deux joues latérales 26 et une plaque 27 entre ses deux joues latérales 26, la plaque 27 étant munie de trous.

Une extrémité supérieure d'une tringle inférieure 25 reliée à la pièce de liaison mécanique 10 pour déplacer le bras supérieur 9 est articulée sur les joues latérales 26 qui font partie de la partie inférieure de raccord 24, comme illustré sur les figures 1 et 5a.

En conclusion, le pantographe 1 selon l'invention permet un gain de masse dynamique et réduit l'inertie du pantographe 1 en mouvement vertical, tout en conservant l'aérodynamique du pantographe 1.

## Revendications

1. Pantographe (1) de véhicule ferroviaire comprenant un bras inférieur (8), un bras supérieur (9) en matériau composite articulé au bras inférieur (8) et déplaçant une tête de captage (7) à laquelle il est fixé à une extrémité du bras supérieur (9), des moyens de conduction du courant entre la tête de captage (7) et une ou plusieurs lignes de courant de toiture du véhicule ferroviaire,
**caractérisé en ce que** les moyens de conduction du courant comportent :
- un élément conducteur de courant, comprenant un tube anti-balançant (12) de la tête de captage (7), distinct du bras supérieur (9), fixé à la tête de captage (7) et
- le bras inférieur (8) en matériau conducteur de courant, relié électriquement, par des moyens de liaison électrique, au tube anti-balançant (12) et à la ou aux lignes de courant.

2. Pantographe (1) de véhicule ferroviaire selon la revendication 1, **caractérisé en ce que** des moyens de liaison électrique relient le tube anti-balançant (12) à une bande de frottements (15) de la tête de captage (7).

3. Pantographe (1) de véhicule ferroviaire selon l'une des revendications 1 à 2, **caractérisé en ce que** le pantographe (1) comporte une pièce de liaison mécanique (10) en métal qui présente une partie supérieure de raccord (23) avec le bras supérieur (9) et une partie inférieure de raccord (24) avec le bras inférieur (8).

4. Pantographe (1) de véhicule ferroviaire selon la revendication 3, **caractérisé en ce qu'**une extrémité inférieure du bras supérieur (9) s'emmanche par-dessus un embout fileté (23a) de la partie supérieure de raccord (23), auquel elle est vissée, collée et rivetée.

5. Pantographe (1) de véhicule ferroviaire selon la revendication 4, **caractérisé en ce que** l'embout fileté (23a) comporte une partie de rigidification (23b).

6. Pantographe (1) de véhicule ferroviaire selon la revendication 5, **caractérisé en ce que** la partie de rigidification (23b) est tronconique et son épaisseur augmente vers la partie inférieure de raccord (24).

7. Pantographe (1) de véhicule ferroviaire selon l'une des revendications 1 à 6, **caractérisé en ce que** le bras supérieur (9) comporte des parties longitudinales, suivant la longueur du bras supérieur (9), ayant des sections transversales différentes.

8. Pantographe (1) de véhicule ferroviaire selon la revendication 7, **caractérisé en ce que** le bras supérieur (9) comporte une première partie tronconique et une deuxième partie intermédiaire (21) ayant une section transversale elliptique, la plus grande dimension de l'ellipse étant parallèle à une direction longitudinale (d) de la tête de captage 7.

9. Pantographe (1) de véhicule ferroviaire selon la revendication 8, **caractérisé en ce que** la deuxième partie intermédiaire (21) présente une variation d'au moins une dimension de l'ellipse suivant la longueur du bras supérieur (9).

10. Pantographe (1) de véhicule ferroviaire selon la revendication 9, **caractérisé en ce que** la deuxième partie intermédiaire (21) présente une variation de la plus petite dimension de l'ellipse sur une première longueur.

11. Pantographe (1) de véhicule ferroviaire selon l'une des revendications 9 à 10, **caractérisé en ce que** la deuxième partie intermédiaire (21) présente une variation de la plus grande dimension de l'ellipse sur une deuxième longueur.

12. Pantographe (1) de véhicule ferroviaire selon l'une des revendications 8 à 11, **caractérisé en ce que** le bras supérieur (9) comporte une troisième partie (22) circulaire.

13. Pantographe (1) de véhicule ferroviaire selon l'une des revendications 1 à 6, **caractérisé en ce que** le bras supérieur est sensiblement cylindrique.

14. Pantographe (1) de véhicule ferroviaire selon l'une des revendications 1 à 13, **caractérisé en ce que** l'élément conducteur est articulé à une patte du bras inférieur (8).

## Patentansprüche

1. Stromabnehmer (1) eines Schienenfahrzeugs, der einen unteren Arm (8), einen oberen Arm (9) aus Verbundmaterial, der an den unteren Arm (8) angelenkt ist und einen Stromabnehmerkopf (7) verschiebt, an dem er an einem Ende des oberen Arms (9) befestigt ist, Einrichtungen zum Leiten des Stroms zwischen dem Stromabnehmerkopf (7) und einer oder mehreren Dachstromleitungen des Schienenfahrzeugs enthält,
**dadurch gekennzeichnet, dass** die Leiteinrichtungen des Stroms aufweisen:
- ein stromleitendes Element, das ein Seitenhalterrohr (12) des Stromabnehmerkopfs (7) enthält, das sich vom oberen Arm (9) unterscheidet, das am Stromabnehmerkopf (7) befestigt ist, und
- den unteren Arm (8) aus stromleitendem Material, der durch elektrische Verbindungseinrichtungen mit dem Seitenhalterrohr (12) und mit der oder den Stromleitungen elektrisch verbunden ist.

2. Stromabnehmer (1) eines Schienenfahrzeugs nach Anspruch 1, **dadurch gekennzeichnet, dass** elektrische Verbindungseinrichtungen das Seitenhalterrohr (12) mit einer Schleifleiste (15) des Stromabnehmerkopfs (7) verbinden.

3. Stromabnehmer (1) eines Schienenfahrzeugs nach einem der Ansprüche 1 bis 2, **dadurch gekennzeichnet, dass** der Stromabnehmer (1) ein mechanisches Verbindungsbauteil (10) aus Metall aufweist, das einen oberen Anschlussteil (23) an den oberen Arm (9) und einen unteren Anschlussteil (24) an den unteren Arm (8) aufweist.

4. Stromabnehmer (1) eines Schienenfahrzeugs nach Anspruch 3, **dadurch gekennzeichnet, dass** ein unteres Ende des oberen Arms (9) sich über einen Gewindeansatz (23a) des oberen Anschlussteils (23) aufschiebt, an den es geschraubt, geklebt und genietet wird.

5. Stromabnehmer (1) eines Schienenfahrzeugs nach Anspruch 4, **dadurch gekennzeichnet, dass** der Gewindeansatz (23a) einen Versteifungsteil (23b) aufweist.

6. Stromabnehmer (1) eines Schienenfahrzeugs nach Anspruch 5, **dadurch gekennzeichnet, dass** der Versteifungsteil (23b) kegelstumpfförmig ist und seine Dicke zum unteren Anschlussteil (24) hin zunimmt.

7. Stromabnehmer (1) eines Schienenfahrzeugs nach einem der Ansprüche 1 bis 6, **dadurch gekennzeichnet, dass** der obere Arm (9) Längsteile gemäß der Länge des oberen Arms (9) aufweist, die unterschiedliche Querschnitte haben.

8. Stromabnehmer (1) eines Schienenfahrzeugs nach Anspruch 7, **dadurch gekennzeichnet, dass** der obere Arm (9) einen ersten kegelstumpfförmigen Teil und einen zweiten Zwischenteil (21) aufweist, der einen elliptischen Querschnitt hat, wobei die größte Abmessung der Ellipse parallel zu einer Längsrichtung (d) des Stromabnehmerkofs (7) liegt.

9. Stromabnehmer (1) eines Schienenfahrzeugs nach Anspruch 8, **dadurch gekennzeichnet, dass** der zweite Zwischenteil (21) eine Änderung mindestens einer Abmessung der Ellipse gemäß der Länge des oberen Arms (9) aufweist.

10. Stromabnehmer (1) eines Schienenfahrzeugs nach Anspruch 9, **dadurch gekennzeichnet, dass** der zweite Zwischenteil (21) eine Änderung der kleinsten Abmessung der Ellipse über eine erste Länge aufweist.

11. Stromabnehmer (1) eines Schienenfahrzeugs nach einem der Ansprüche 9 bis 10, **dadurch gekennzeichnet, dass** der zweite Zwischenteil (21) eine Änderung der größten Abmessung der Ellipse über eine zweite Länge aufweist.

12. Stromabnehmer (1) eines Schienenfahrzeugs nach einem der Ansprüche 8 bis 11, **dadurch gekennzeichnet, dass** der obere Arm (9) einen dritten kreisförmigen Teil (22) aufweist.

13. Stromabnehmer (1) eines Schienenfahrzeugs nach einem der Ansprüche 1 bis 6, **dadurch gekennzeichnet, dass** der obere Arm im Wesentlichen zylindrisch ist.

14. Stromabnehmer (1) eines Schienenfahrzeugs nach einem der Ansprüche 1 bis 13, **dadurch gekennzeichnet, dass** das leitende Element an eine Klaue des unteren Arms (8) angelenkt ist.

## Claims

1. Rail vehicle pantograph (1) comprising a lower arm (8), an upper arm (9) made of composite material articulated to the lower arm (8) and moving a contact head (7) to which it is fixed at one end of the upper arm (9), means of conducting current between the contact head (7) and one or more power lines mounted in the roof of the rail vehicle,
**characterized in that** the current-conducting means comprise:
- a current-conducting element, comprising a stabilizing tube (12), distinct from the upper arm (9), fixed to the contact head (7), and preventing the contact head (7) from swaying, and
- the lower arm (8) made of a current-conducting material, connected electrically, via electrical-connection means, to the stabilizing tube (12) and to the power line or lines.

2. Rail vehicle pantograph (1) according to Claim 1, **characterized in that** the electrical-connection means connect the stabilizing tube (12) to a contact strip (15) of the contact head (7).

3. Rail vehicle pantograph (1) according to one of Claims 1 and 2, **characterized in that** the pantograph (1) comprises a mechanical-connection knuckle (10) made of metal which has an upper connection part (23) for connecting to the upper arm (9) and a lower connection part (24) for connecting to the lower arm (8).

4. Rail vehicle pantograph (1) according to Claim 3, **characterized in that** a lower end of the upper arm (9) is fitted over the top of a threaded end piece (23a) of the upper connection part (23), to which end piece it is screwed, bonded and riveted.

5. Rail vehicle pantograph (1) according to Claim 4, **characterized in that** the threaded end piece (23a) comprises a stiffening part (23b).

6. Rail vehicle pantograph (1) according to Claim 5, **characterized in that** the stiffening part (23b) is frustoconical and its thickness increases towards the lower connection part (24).

7. Rail vehicle pantograph (1) according to one of Claims 1 to 6, **characterized in that** the upper arm (9) comprises longitudinal parts, along the length of the upper arm (9), that have different cross sections.

8. Rail vehicle pantograph (1) according to Claim 7, **characterized in that** the upper arm (9) comprises a frustoconical first part and an intermediate second part (21) of elliptical cross section, the longest dimension of the ellipse being parallel to a longitudinal direction (d) of the contact head (7).

9. Rail vehicle pantograph (1) according to Claim 8, **characterized in that** the intermediate second part (21) has a variation in at least one dimension of the ellipse along the length of the upper arm (9).

10. Rail vehicle pantograph (1) according to Claim 9, **characterized in that** the intermediate second part (21) has a variation in the shortest dimension of the ellipse over a first length.

11. Rail vehicle pantograph (1) according to one of Claims 9 and 10, **characterized in that** the intermediate second part (21) has a variation in the largest dimension of the ellipse over a second length.

12. Rail vehicle pantograph (1) according to one of Claims 8 to 11, **characterized in that** the upper arm (9) comprises a circular third part (22).

13. Rail vehicle pantograph (1) according to one of Claims 1 to 6, **characterized in that** the upper arm is substantially cylindrical.

14. Rail vehicle pantograph (1) according to one of Claims 1 to 13, **characterized in that** the conducting element is articulated to a lug of the lower arm (8).
